(19) Europäisches Patentamt
European Patent Office
Office européen des brevets

(11) Veröffentlichungsnummer: **0 278 022**
**A2**

# (12) EUROPÄISCHE PATENTANMELDUNG

(21) Anmeldenummer: **87101736.4**

(51) Int. Cl.⁴: **C08L 51/00**

(22) Anmeldetag: **09.02.87**

(43) Veröffentlichungstag der Anmeldung:
**17.08.88 Patentblatt 88/33**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Schlemmer, Lothar**
**Duisbergstrasse 1A**
**D-6701 Maxdorf(DE)**

## (54) Verfahren zur Herstellung von thermoplastischen Formmassen auf Basis von Pfropfmischpolymerisaten und deren Verwendung.

(57) Verfahren zur Herstellung von thermoplastischen Formmassen auf Basis von Pfropfmischpolymerisaten, wobei man ein Blockcopolymeres A, aufgebaut aus

a1) 97 bis 5 Gew.%, bezogen auf A, mindestens einem vinylaromatischen Monomeren aus der Gruppe von Styrol, den kernalkylierten Styrolen, den seitenkettenalkylierten Styrolen oder deren Mischungen

und

a2) 3 bis 95 Gew.% mindestens einem konjugierten Dien aus der Gruppe von Butadien, Isopren oder deren Mischungen in Abwesenheit von Radikalinitiatoren in Gegenwart von Dicarbonsäuren mit 4 C-Atomen basierenden Monomeren B bei Temperaturen von 150 bis 260°C (Schmelze von A) umsetzt. Charakteristisch ist, daß man als Monomeres B Fumarsäure verwendet.

Die so hergestellen Produkte werden zu Formteilen verarbeitet.

EP 0 278 022 A2

# Verfahren zur Herstellung von thermoplastischen Formmassen auf Basis von Pfropfmischpolymerisaten und deren Verwendung

Die Erfindung betrifft ein Verfahren zur Herstellung von thermoplastischen Formmassen auf Basis von Pfropfmischpolymerisaten, wobei man ein Blockcopolymeres A, aufgebaut aus einem vinylaromatischen Monomeren aus der Gruppe von Styrol, den kernalkylierten Styrolen, den seitenkettenalkylierten Styrolen oder deren Mischungen und einem konjugierten Dien aus der Gruppe von Butadien, Isopren oder deren Mischungen in Abwesenheit von Radikalinitiatoren in an sich bekannter Weise in Gegenwart von bifunktionellen, auf Basis von Dicarbonsäuren mit 4 C-Atomen basierende Monomeren bei Temperaturen von 150 bis 260°C (Schmelze A) umsetzt.

Zum Stand der Technik nennen wir:

(1) DE-A-29 43 657 und

(2) DE-A-31 05 328.

Blockpolymere werden durch anionische Copolymerisation unter Verwendung eines organischen Alkali-Initiators hergestellt, wobei eine konjugierte Dien-Verbindung und eine aromatische Vinylverbindung als Monomere eingesetzt werden.

Zur Erhöhung von Haftungseigenschaften, Grünfestigkeit und anderen Eigenschaften wurden solche Blockcopolymere mit Maleinsäurederivaten in Gegenwart von Radikalbildnern umgesetzt. Bei jedem dieser Verfahren wird jedoch die Maleinierung unter Erzeugung eines Radikals durch Starter durchgeführt, wodurch eine Gelierung der erhaltenen modifizierten Blockcopolymere unvermeidbar ist und damit der Schmelzfluß entscheidend verschlechtert wird. In (1) werden Blockpolymere mit Maleinsäureanhydrid umgesetzt ohne Verwendung eines Starters. Vorteilhaft ist die geringere Gelierung des modifizierten Harzes. Nachteilig ist die Toxizität des Maleinsäureanhydrids, die bei der Vorabmischung oder Dosierung einen hohen Aufwand erfordert. Nachteilig ist eine starke Abnahme des Schmelzflußindexes der umgesetzten Proben gegenüber den Ausgangsproben durch Abbau der Polymerkette.

Aufgabe war es, ein Verfahren zur Herstellung von modifizierten Blockpolymeren zu finden, die nicht gelieren, einen hohen Schmelzfluß haben und bei denen Carboxygruppen durch nicht toxische Substanzen eingeführt werden, ohne dabei den Schmelzfluß stark abzusenken.

Diese Aufgabe wird gelöst durch ein Verfahren gemäß Patentanspruch 1.

Die Erfindung betrifft daher ein Verfahren zur Herstellung von thermoplastischen Formmassen auf Basis von Pfropfmischpolymerisaten, wobei man

A ein Blockcopolymeres, aufgebaut aus

a1) 97 bis 5 Gew.%, bezogen auf A, mindestens einem vinylaromatischen Monomeren aus der Gruppe von Styrol, den kernalkylierten Styrolen, den seitenkettenalkylierten Styrolen oder deren Mischungen

und

a2) 3 bis 95 Gew.% mindestens einem konjugierten Dien aus der Gruppe von Butadien, Isopren oder deren Mischungen

in Abwesenheit von Radikalinitiatoren in an sich bekannter Weise

in Gegenwart von

B ethylenisch ungesättigten Dicarbonsäuren mit 4 C-Atomen basierenden Monomeren bei Temperaturen von 150 bis 260°C (Schmelze von A) umsetzt. Dieses Verfahren ist dadurch gekennzeichnet, daß man als Monomeres B Fumarsäure verwendet.

Nachstehend werden das erfindungsgemäße Verfahren und die zu seiner Durchführung erforderlichen Ausgangsstoffe beschrieben.

Das Verfahren ist an sich bekannt aus (1) und (2).

Als Komponente A kommen an sich bekannte Blockcopolymere (vgl. (1)) in Frage, die aufgebaut sind aus

a1) 97 bis 5 Gew.%, bezogen auf A, mindestens eines vinylaromatischen Monomeren aus der Gruppe von Styrol, den kernalkylierten Styrolen, den seitenkettenalkylierten Styrolen oder deren Mischungen, vorzugsweise werden 90 bis 10 Gew.%, bezogen auf A des vinylaromatischen Monomeren, insbesondere Styrol, angewendet.

Ferner enthalten die Blockcopolymeren A mindestens ein weiteres Monomeres a2) einpolymerisiert, vorzugsweise besteht das Blockcopolymere aus den Monomeren a1) und a2).

Als Monomere a2) kommen in Frage

a2) 3 bis 95 Gew.%, bezogen auf A, mindestens einem konjugierten Dien aus der Gruppe von Butadien, Isopren oder deren Mischungen, vorzugsweise wird das Monomere a2) in Mengen von 10 bis 90 Gew.% angewendet, wobei Butadien bevorzugt ist.

Bei der Umsetzung von A mit B entstehen die Pfropfprodukte, die nachstehend als modifizierte Blockcopolymere bezeichnet werden.

Bevorzugt sind modifizierte Blockcopolymere aus

A. 99,95 bis 90 Gew.%, bezogen auf A+B, Blockcopolymer aus

a1) 97 bis 5 Gewichtsteilen aromatischer Vinylverbindung

a2) 3 bis 95 Gewichtsteilen konjugierter Dien-Verbindung,

wobei a1) + a2) = 100 Gewichtsteile sind und

B. 0,05 bis 10 Gew.%, bezogen auf A + B, Fumarsäure.

C. Gegebenenfalls können weitere, auf das Blockcopolymere pfropfbare Monomere verwendet werden,

D. wobei die Pfropfung in Gegenwart von 0,05 bis 20 Gewichtsteilen eines Amids unter denselben Bedingungen (unter Schmelzbedingungen ohne Verwendung eines Radikal-Initiators) durchgeführt wird.

Die erhaltenen Produkte zeichnen sich durch geringe Verfärbung, extrem niedrigen Gel-Gehalt und gute Verarbeitbarkeit aus. Vorteilhaft bei dem Verfahren ist, daß durch die fehlende Toxizität der Fumarsäure die Misch-und Dosiervorrichtungen sehr einfach gestaltet werden können. Besonders vorteilhaft ist, daß der Schmelzflußindex der modifizierten Polymeren nur gering verändert wird.

Die Komponente B ist Fumarsäure, bevorzugt in Mengen von 0,2 bis 3,9 Gewichtsteile.

Die Komponente C ist ein auf die Komponente A aufpfropfbares Monomeres, wie (Meth)-acrylsäureester oder Styrol. Die Komponente C ist bevorzugt unter 5 Gewichtsteilen, bezogen auf 100 Gewichtsteile A + B, des modifizierten Blockpolymeren enthalten.

Bevorzugt ist bei der Umstzung von A, B und gegebenenfalls C ein Amid vorhanden.

Amide im Sinne der vorliegenden Erfindung sind solche chemische Substanzen, die mindestens eine Amid-Gruppe

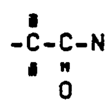 (1)

enthalten.

Bevorzugt sind oligomere und polymere Polyamide, wie Polyamid 6 oder Polyamid 6,6, besonders bevorzugt Amide, N-substituierte und N,N-disubstituierte Amide von organischen Mono-, Di- oder Polycarbonsäuren. Besonders bevorzugt sind Amide, N-substituierte und N,N-disubstituierte Amide von Monocarbonsäuren der allgemeinen Formel

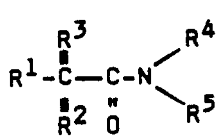

wobei $R^1$ = Alkyl-, Alkenyl-, Aryl-, Alkyl-aryl, $R^2$, $R^3$, $R^4$ und $R^5$ = H oder $R^1$ ist. Beispielhaft seien genannt Ölsäureamid, Stearinsäureamid, n-Valeriansäureamid, Palmitinsäureamid, Methoxyessigsäureamid, Phenylessigsäureamid, Acetamid, die entsprechenden N-und N,N-substituierten Amide, wie Dimethylacetamid.

Besonders bevorzugt sind Amide der allgemeinen Formel

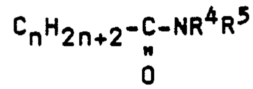

mit n = 5-25 und $R^4$, $R^5$ = H.

Die Amidverbindung ist im allgemeinen in Mengen von 0,05 bis 20 Gewichtsteilen in der Mischung vorhanden, bevorzugt in Mengen von 0,1 bis 3 Gew.%.

Zusätzlich kann man einen thermischen Stabilisator für das Blockpolymere anwenden, wie es in der DE-PS 29 43 637 beschrieben ist. Wesentlich ist, daß man keinen Radikalstarter, wie Azo-oder Peroxidstarter, einsetzt.

Die Mischungen werden in der Schmelze von A umgesetzt, bevorzugt bei Temperaturen von über 150°C bis 260°C, besonders bevorzugt zwischen 180°C und 260°C.

Vorzugsweise verwendet man dafür einen Zweischneckenextruder. Die Verweilzeit beträgt im allgemeinen 0,5 bis 20 Minuten, bevorzugt 2 bis 10 Minuten.

Die Komponenten werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielseitig verwendbar.

Die nach dem erfindungsgemäßen Verfahren erhältlichen modifizierten Blockpolymerisate können in der üblichen Weise verändert werden. Sie können daher z.B. Verstärkungs-und Füllstoffe, insbesondere Glasfasern, Flammschutzmittel, Stabilisatoren, Gleit-und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die nach dem erfindungsgemäßen Verfahren hergestellten Blockpolymeren eignen sich als Mineralölhilfsmittel, Haftvermittler, Klebstoff, Kautschuk,

Filmbildner, für die Herstellung von photopolymerisierbaren Schichten, wie Resist und Druckplatten, außerdem Harze, Lackkomponenten, Werkstoffe für Formkörper, Folien und Filme, Schlagzähmodifier bei der Herstellung von Polymeren oder zum nachträglichen Abmischen mit Polymeren, Zusatz zu vernetzenden Systemen.

Das erfindungsgemäße Verfahren wird nachstehend anhand von Beispielen und Vergleichsversuchen näher erläutert.

Beispiel 1

95 Gewichtsteile Cariflex TR 1102 (Styrol-Butadien-Styrol-Dreiblock, 30 Gew.% Styrol, Fa. Shell) mit einem Schmelzflußindex MFI von 6 g/10 Min., 4 Gewichtsteile Fumarsäure und 1 Gewichtsteil Stearinsäure amid werden in einem Zweischneckenextruder (ZSK 53) der Firma Werner & Pfleiderer dosiert und in einem ersten Teil unter Verwendung von Knetelementen bei 210°C aufgeschmolzen, anschließend in einem zweiten Teil unter Kneten und Verwendung von zurückfordernden Knetelementen bei 210°C umgesetzt und anschließend in einer Entgasungszone bei 210°C durch Anlegen von Vakuum entgast. Die mittlere Verweilzeit im Extruder beträgt 3 Minuten. Die austretende Schmelze wird durch ein Wasserbad geleitet, granuliert und getrocknet. Die eingebaute Menge an Fumarsäure beträgt 2,6 Gew.%, der MFI 5,1 g/10 Min.

Vergleichsversuch I

95 Gewichtsteile Cariflex TR 1102 werden gemäß Beispiel 1 mit 4 Gewichtsteilen Maleinsäureanhydrid und 1 Gewichtsteil 2,6-Di-tert.-butyl-4-methylphenol umgesetzt. Die eingebaute Menge an MSA beträgt 1,7 Gew.%. der MFI 3,8 g/10 Min.

Beispiel 2

96 Gewichtsteile Cariflex TR 1107 (Styrol-Isopren-Styrol Dreiblock, 15 Gew.% Styrol, Fa. Shell) mit einem MFI von 10 g/10 Min., 2,5 Gewichtsteile Fumarsäure, 1 Gewichtsteil Stearinsäureamid und 0,5 Gewichtsteile 2,6-Di-tert.-butyl-4-methylphenol werden analog Beispiel 1 umgesetzt. Die eingebaute Menge an Fumarsäure beträgt 1,8 Gew.%, der MFI beträgt 8,9.

Vergleichsversuch II

96 Gewichtsteile Cariflex TR 1107 werden gemäß Beispiel 1 mit 2,5 Gewichtsteilen Maleinsäureanhydrid, 1 Gewichtsteil Phenothiazin und 0,5 Gewichtsteile 2,6-Di-tert.-butyl-4-methylphenol analog Beispiel 2 umgesetzt. Die eingebaute Menge an Maleinsäureanhydrid beträgt 1,1 Gew.%, der MFI beträgt 5,7.

Beispiel 3

95 Gewichtsteile eines Zweiblockcopolymeren, bestehend aus Styrol-Butadien-Ketten mit einem Styrolgehalt von 33 Gew.% und einem MFI von 14,5 wird mit 4 Gewichtsteilen Fumarsäure und 1 Gewichtsteil Stearinsäureamid gemäß Beispiel 1 umgesetzt. Die eingebaute Menge an Fumarsäure beträgt 3,1 Gew.%, der MFI beträgt 12,1.

Vergleichsversuch III

95 Gewichtsteile Zweiblockpolymer gemäß Beispiel 3 werden mit 4 Gewichtsteilen Maleinsäureanhydrid, 0,5 Gewichtsteile 2,6-Di-tert.-butyl-4-methylphenol analog Beispiel 3 umgesetzt. Die eingebaute Menge an Maleinsäureanhydrid beträgt 2,3 %, der MFI beträgt 7,2.

**Ansprüche**

1. Verfahren zur Herstellung von thermoplastischen Formmassen auf Basis von Pfropfmischpolymerisaten, wobei man

A ein Blockcopolymeres, aufgebaut aus

a1) 97 bis 5 Gew.%, bezogen auf A, mindestens einem vinylaromatischen Monomeren aus der Gruppe von Styrol, den kernalkylierten Styrolen, den seitenkettenalkylierten Styrolen oder deren Mischungen

und

a2) 3 bis 95 Gew.% mindestens einem konjugierten Dien aus der Gruppe von Butadien, Isopren oder deren Mischungen

in Abwesenheit von Radikalinitiatoren

in Gegenwart von

B ethlenisch ungesättigten Dicarbonsäuren mit 4 C-Atomen basierenden Monomeren bei Temperaturen von 150 bis 260°C (Schmelze von A) umsetzt, dadurch gekennzeichnet, daß man als Monomeres B Fumarsäure verwendet.

2. Verfahren nach Anspruch 1, dadurch gekennzeichnet, daß zusätzlich ein Amid D, bei der Umsetzung von A + B, angewendet wird.

3. Verfahren nach Anspruch 1, dadurch gekennzeichnet, daß die Umsetzung von A mit B in Gegenwart eines weiteren Monomeren C aus der Gruppe der (Meth)acrylsäureester, Styrol oder deren Mischungen durchgeführt wird.

4. Verwendung von Produkten, hergestellt nach dem Verfahren gemäß Patentanspruch 1 zur Herstellung von Formteilen.

5. Formteile aus Produkten, hergestellt nach dem Verfahren gemäß Patentanspruch 1.